**Europäisches Patentamt**

**European Patent Office**

**Office européen des brevets**

(19)

(11) Veröffentlichungsnummer: **0 012 154
B1**

(12) **EUROPÄISCHE PATENTSCHRIFT**

(45) Veröffentlichungstag der Patentschrift:
**30.12.81**

(21) Anmeldenummer: **79102936.6**

(22) Anmeldetag: **13.08.79**

(51) Int. Cl.³: **B 23 B 29/24,** B 23 Q 35/10

(54) Messerkopf zum Kopierschälen von Stangen, Rohren und Draht.

(30) Priorität: **29.09.78 DE 2842436**

(43) Veröffentlichungstag der Anmeldung:
**25.06.80 Patentblatt 80/13**

(45) Bekanntmachung des Hinweises auf die Patenterteilung:
**30.12.81 Patentblatt 81/52**

(84) Benannte Vertragsstaaten:
**AT FR GB IT**

(56) Entgegenhaltungen:
**CH-A-305 482
DE-A-2 642 965
DE-A-2 802 390
DE-B-1 048 461
DE-C-956 007
FR-A-376 468
FR-A-740 879
GB-A-748 620**

(73) Patentinhaber: **TH. KIESERLING & ALBRECHT,
Birkenweiher 66, D-5650 Solingen 1 (DE)**

(72) Erfinder: **Scholz, Klaus, Elisenstrasse 11,
D-5650 Solingen 1 (DE)**

Messerkopf zum Kopierschälen von Stangen, Rohren und Draht

Die Erfindung bezieht sich auf einen Messerkopf gemäss dem Oberbegriff von Anspruch 1. Beim Kopierschälen von Stangen und Rohren etc. soll, nicht wie sonst beim Schälen üblich, ausser dem Abtrag der randentkohlten Schicht und des Zunders auch eine Verbesserung der Rundheit und Durchmesserkonstanz des zu schälenden Werkstücks erzielt werden, vielmehr kommt es darauf an, einen möglichst geringen Spanverlust zu erzielen. Dabei muss die gesamte Mantelfläche des Werkstücks sauber geschält sein. Dies erfolgt durch Abtragen einer Schicht konstanter Dicke von dem Aussendurchmesser des Werkstücks. In dieser Funktion muss das Schälmesser, ein Werkstück mit ovalem Querschnitt vorausgesetzt, bei jeder Umdrehung des Messerkopfes eine radiale Hin- und Herbewegung machen.

Aus der GB-PS 14 79 872 ist ein Messerkopf zum Kopierschälen bekannt. Die Messerhalter gleiten in radialen Führungen in den Schiebern, um der unrunden Kontur der Werkstücke folgen zu können. Da die Messerhalter unter dem Schnittdruck verschoben werden müssen, entstehen grosse Reibkräfte, die von den Federn, gegen die sich die Messerhalter im Schieber abstützen, überwunden werden müssen. Die Kräfte zur Verschiebung der Messerhalter in den Schiebern müssen zum Teil von den Tastmitteln, die auf dem Umfang des Werkstücks rollen, aufgebracht werden, was zu einem hohen Verschleiss derselben führt. Messer und Messerhalter folgen bei dieser Lösung der Werkstückkontur nur sehr schwer, was insbesondere bei hohen Drehzahlen des Messerkopfes nachteilig ist.

Der Erfindung liegt die Aufgabe zugrunde, eine Lösung zu finden, bei der der Messerhalter der Kontur des Werkstücks leicht folgt. Die erfindungsgemässe Lösung dieser Aufgabe ist im kennzeichnenden Teil von Anspruch 1 wiedergegeben. Die auftretenden Reibkräfte zwischen Schieber und Messerhalter werden auf einen Bruchteil reduziert. Die erforderliche Kraft der Schieber zum Andrücken des Messerhalters an das Werkstück wird entsprechend reduziert, ebenso der Verschleiss bei den Tastmitteln.

Bei einer möglichen Ausgestaltung der Erfindung gemäss Anspruch 2 bietet sich der Vorteil, dass der Raum vor den Messern zum Abtransport der Späne nicht verbaut wird.

Bei einer Weiterbildung der Erfindung gem. Anspruch 3 wird die Nachführbarkeit des Messerhalters insoweit verbessert, als der Vektor der resultierenden Schnittkraft durch das Gelenk des Messerhalters geleitet wird. Dabei ist vorzugsweise ein Winkel von 14° bis 20° zwischen der Tangenten an den Werkstückquerschnitt im Schnittpunkt und der Geraden durch Schnittpunkt und Gelenkpunkt vorgesehen. Dadurch wird die erforderliche Federkraft zum Andrücken der Messerhalter an das Werkstück verkleinert und der Verschleiss der Tastmittel auf ein Minimum reduziert.

Die Erfindung wird im folgenden anhand der Zeichnung, die die Erfindung in schematischer Darstellung wiedergibt, näher erläutert.

Dabei zeigen:

Fig. 1 einen Messerkopf in Stirnseitenansicht

Fig. 2 einen Schnitt durch eine Messereinheit gem. Linie II–II in Fig. 1

Fig. 3 eine aufgeschnittene Ansicht gem. Linie III–III in Fig. 1 in vergrössertem Massstab.

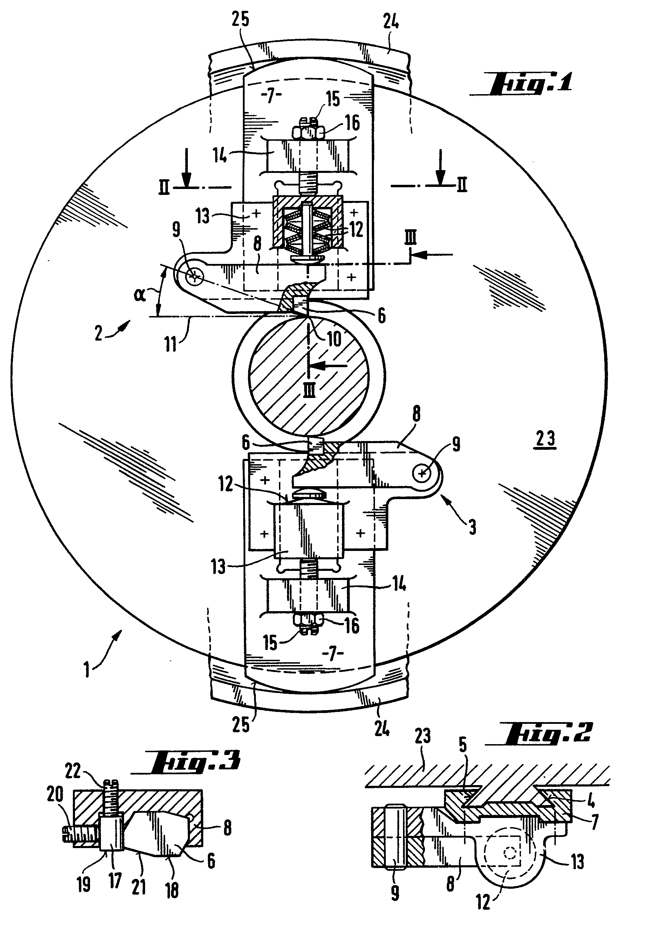

Figur 1 zeigt einen Messerkopf 1 mit zwei Messereinheiten 2, 3, die auf einer Grundplatte 23 befestigt sind. Die Messereinheiten sind untereinander gleichartig. Jede Messereinheit gleitet in Führungen 4, 5. Die Führungsschienen sind so angeordnet, dass jedes Schneidmesser 6 bei Verschiebung der ganzen Messereinheit 2 in radialer Richtung bewegt wird. Die Messereinheit 2 besteht aus einem Schieber 7, einem Gleitstück 13, an dem ein Messerhalter 8 angelenkt ist. Ein Gelenk 9 zwischen Schieber und Messerhalter liegt seitlich versetzt neben den Führungen 4, 5. Die Aussermittigkeit des Gelenkpunktes ist so gewählt, dass eine Gerade durch den Drehpunkt des Gelenks 9 und den Schnittpunkt 10 mit der Tangente 11 an den Werkstückquerschnitt 10 einen Winkel von 10° bis 25° bilden. Damit entspricht die Lage der Geraden dem resultierenden Schnittkraftvektor.

Das freie Ende des Messerhalters 8 stützt sich über ein Federpaket 12 am Gleitstück 13 ab. Die Einstellung des Gleitstücks erfolgt über eine Stellschraube 15, die mit Gewinde axial in einem Stützbock 14 am Schieber 7 befestigt ist. Durch Drehen an der Schraube 15 wird die Lage jedes einzelnen Messers relativ zum Werkstück eingestellt. Die Kontermutter 16 sichert die Lage der Stellschraube 15.

Da die Erfindung einen Messerkopf zum Kopierschälen betrifft, ist dem Schälmesser 6 ein Taststift 17 vorgeordnet (vergl. Fig. 3). Der Taststift 17 ermittelt die Lage der Oberfläche unmittelbar neben dem Schälmesser. Die Berührungsfläche 19 des Taststiftes 17 steht gegenüber der Nebenschneide 18 des Schälmessers 6, um das Mass des abzuhebenden Spanes zurück. Der Taststift 17 wird zusammen mit dem Messer 6 von einer Klemmschraube 20 im Messerhalter 8 festgeklemmt. Dabei liegt der Taststift unmittelbar an einer Stirnseite des Messers vor dessen Hauptschneide 21 an. Durch Verschiebung des Taststifts mit Hilfe der Einstellschraube 22 wird die gewünschte Spantiefe eingestellt. Zum Verstellen des Taststifts wird die Klemmschraube 20 gelöst.

Durch die federnd nachgiebige Lagerung des Messers 6 gegenüber dem Messerkopf 1 wird in Verbindung mit dem Taststift 17 eine Schicht gleichbleibender Dicke vom Werkstück abgeschält. Den Unrundheiten des Werkstücks folgt ausschliesslich der Messerhalter, während der Schieber in seinen Führungen 4, 5 ortsfest bleibt. Die Lage des Schiebers wird ausschliesslich zur zentralen Einstellung des Messerkopfes auf einen neuen Werkstückdurchmesser verändert. Die Einzeleinstellung erfolgt durch die Stellschraube 15. Somit bleibt die Schneidengeometrie bei Einstellung des Messers auf einen anderen Werkstückdurchmesser unverändert. Die Verschwenkungen des Messerhalters beim Kopieren der Werkstückkontur sind unerheblich, da der Messerhalter im Rahmen der Möglichkeiten des Messerkopfes langgestreckt ausgebildet ist. Die Schieber 7 stützen sich aussen radial an einer mit dem Messerkopf umlaufenden Konushülse 24, die in Fig. 1 nur abschnittweise dargestellt ist. Die Schieber weisen an ihren äusseren Enden einen Konus-Ausschnitt 25 auf, mit dem sie an der Konushülse 24 anliegen. Zur zentralen Verstellung der Messereinheiten auf dem vorgesehenen Werkstück-Durchmesser wird die Konushülse axial verschoben.

## Patentansprüche

1. Messerkopf zum Kopierschälen von Rohren, Stangen und dergl., mit einer rotierenden Grundplatte (23) und sternförmig darauf angeordneten Schiebern (7), an deren nach innen gerichteten Enden Schälmesserhalter (8) beweglich gelagert sind, die sich an den Schiebern (7) gegen die Kraft einer Feder (12) abstützen und mit in den Schälmesserhaltern befestigten Schälmessern (6), denen Tastmittel (17) unmittelbar vorgeordnet sind, dadurch gekennzeichnet, dass die Messerhalter (8) an den Schiebern (7) mit einem Gelenk (9) schwenkbar befestigt sind.

2. Messerkopf nach Anspruch 1, dadurch gekennzeichnet, dass das Gelenk (9) jedes Messerhalters (8) in Drehrichtung des Messerkopfes (1) gesehen hinter dem Schnittpunkt (10) angeordnet ist.

3. Messerkopf an Anspruch 1 und 2, dadurch gekennzeichnet, dass eine Gerade durch das Gelenk (9) des Messerhalters (8) und den Schnittpunkt (10) einen Winkel (α) von 10° bis 25° mit einer Tangente (11) an den Werkstückquerschnitt im Schnittpunkt (10) bildet.

## Revendications

1. Tête porte-lames pour l'écroutage suivant gabarit des barres, tubes et similaires comportant une plaque de base rotative, équipée d'une part, de chariots disposés en forme d'étoile et portant, sur leur extrémité dirigée vers l'intérieur, des éléments porte-lames mobiles, lesquels sous la poussée d'un ressort s'appuient contre les chariots et, d'autre part, de lames de coupe qui sont fixées sur les éléments porte-lames et précédées de palpeurs; cette tête porte-lames étant caractérisée en ce que les éléments porte-lames (8) pivotants sont reliés aux chariots (7) par l'intermédiaire d'une articulation (9).

2. Tête porte-lames selon la revendication 1, caractérisée en ce que l'articulation (9) de chacun des éléments porte-lames (8) est située, vu dans le sens de rotation de la tête porte-lames (1), en amont du point de coupe (10).

3. Tête porte-lames selon l'une des revendications 1 ou 2, caractérisée en ce qu'une droite passant par le centre de l'articulation (9) du porte-lames (8) et le point de coupe (10) forme un angle (α) de 10 à 25° avec le tangente (11) menée à la hauteur du point de coupe (10) sur le pourtour de la section transversale de la pièce à usiner.

## Claims

1. Cutter head for traced turning of tubes, bars and similar workpieces comprising a rotating base plate (23), shides (7) radially located thereon, to the inwardly directed ends of which movably connected blade holders (8), supported each by a spring (12) resting on the shides (7), cutter blades (6) attached to the blade holders (8) and tracing means located immediate by ahead of cutter blades characterised in that the blade holders (8) are privotably linked to the slides (7) by a hinge (9).

2. Cutter head according to claim 1 characterised in that the hinge (9) of each blade holder (8) is located downstream of the contact point (10) seen in the rotative direction of the cutter head (1).

3. Cutter head according to claims 1 and 2 characterised in that a straigh line connecting the hinge (9) of the blade holder and the contact point (10) forms with a tangent line passing through said contact point (10), an angle between 10° and 25°.

0 012 154

Fig:1

Fig:2

Fig:3

5